# EUROPÄISCHE PATENTSCHRIFT

(11) **EP 1 655 623 B1**
(45) Veröffentlichungstag und Bekanntmachung des Hinweises auf die Patenterteilung: **13.06.2007**
(21) Anmeldenummer: 05022537.4
(22) Anmeldetag: 15.10.2005
(51) Int. Cl.: G01V 8/20

(54) **Optischer Sensor**
Optical sensor
Capteur optique

(30) Priorität: 04.11.2004 DE 102004053219
(43) Veröffentlichungstag der Anmeldung: 10.05.2006
(73) Patentinhaber: Leuze electronic GmbH + Co. KG, 73277 Owen/Teck (DE)
(72) Erfinder: Banschbach, Rolf, 72584 Hülben (DE); Schönhaar, Jürgen, 72669 Unterensingen (DE)
(74) Vertreter: Ruckh, Rainer Gerhard

(56) Entgegenhaltungen:
- EP-A- 1 174 733
- DE-A1- 3 330 939
- DE-A1- 10 059 156
- DE-A1- 10 126 086
- DE-A1- 19 850 270
- US-A1- 2002 162 978

## Beschreibung

Die Erfindung betrifft einen optischen Sensor zur Erfassung von Objekten in einem Überwachungsbereich.

Ein derartiger optischer Sensor ist aus der DE 198 50 270 A1 bekannt. Der dort beschriebene optische Sensor bildet einen nach dem Triangulationsprinzip arbeitenden Distanzsensor. Der optische Sensor umfasst einen Sendelichtstrahlen emittierenden Sender und einen Empfangslichtstrahlen empfangenden Empfänger, welcher von einer CCD-Zeile gebildet ist, die mehrere angeordnete photoempfindliche Elemente aufweist. Zur Distanzmessung wird der Schwerpunkt des Lichtflecks auf der CCD-Zeile, der durch die von einem Objekt zurückreflektierten Empfangslichtstrahlen generiert wird, ausgewertet.

Die EP 01 117 433 A betrifft einen optischen Sensor zum Erfassen von Objekten in einem Überwachungsbereich mit einem Sendelichtstrahlen emittierenden Sender und einem Empfangslichtstrahlen empfangenden Empfänger. Der Empfänger ist von wenigstens einer asynchron gesteuerten CMOS-Zeile mit einzeln ansteuerbaren CMOS-Zeilenelementen gebildet, wobei mittels einer Logikschaltung die CMOS-Zeilenelemente durch Kurzschließen zu vorgebbaren Zeiten deaktivierbar sind, die unabhängig von den Zeitpunkten von Start-Impulsen und/oder Shutter-Impulsen sind, mittels derer die CMOS-Zeilenelemente der CMOS-Zeile für eine vorgegebene Belichtungszeit zur Durchführung einer Messung aktivierbar sind, so dass die Belichtungszeit unmittelbar mit einem Start- und/oder Shutter-Impuls beginnt.

Aus der DE 101 26 086 A1 ist ein optischer Sensor bekannt, der eine Sendeeinrichtung mit einer Reihenanordnung von Sendeelementen und eine Empfangseinrichtung mit einer Zeilenanordnung von Empfangselementen aufweist. Mit diesem Sensor können zweidimensionale Bilder einer Objektszene erfasst werden. Dabei ist der Erfassungsbereich des Sensors durch die diskrete Sender-Empfängeranordnung in einzelne Überwachungssegmente unterteilt.

In einzelnen Überwachungssegmenten können zusätzlich mit den dort angeordneten Sendern und Empfängern Distanzmessungen nach dem Phasenmessprinzip durchgeführt werden. Diese Distanzmessung wird zur Einstellung der Fokuslage des Sensors genutzt.

Der Erfindung liegt die Aufgabe zugrunde, einen optischen Sensor der eingangs genannten Art hinsichtlich seiner Funktionalität zu erweitern.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Durch die mit dem ersten Sender durchgeführten Distanzmessungen und die bei den Messungen mit dem zweiten Sender erfassten Strukturmerkmale von Objekten werden bei der Detektion mittels des erfindungsgemäßen optischen Sensors umfassende Informationen über die Lage und Beschaffenheit von Objekten erhalten. Bei der Detektion mit dem zweiten Sensor wird insbesondere die Lage des Objekts relativ zum optischen Sensor erfasst. Zusammen mit den Distanzdaten, die bei den Messungen mit dem ersten Sender erhalten werden, werden somit mit einer einfachen, kostengünstig herstellbaren Anordnung von optoelektronischen Komponenten dreidimensionale Objektvermessungen ermöglicht.

Ein wesentlicher Vorteil des erfindungsgemäßen optischen Sensors besteht darin, dass die von dem ersten und zweiten Sender emittierten Sendelichtstrahlen und als Empfangslichtstrahlen zum optischen Sensor zurückreflektierten Sendelichtstrahlen in einem Empfänger ausgewertet werden. Da der Empfänger aus einer matrixförmigen Anordnung von Empfangselementen besteht, kann dieser sowohl zur Durchführung der Distanzmessungen mit dem ersten Sender und zur Erfassung von Objektstrukturmerkmalen mit dem zweiten Sender verwendet werden.

Der erste Sender sendet zur Durchführung von Distanzmessungen Sendelichtstrahlen mit einem sehr kleinen Strahlquerschnitt aus, wobei zu der nach dem Triangulationsprinzip erfolgenden Distanzmessung die Lage des durch die Sendelichtstrahlen generierten Lichtflecks auf dem Empfänger ausgewertet wird.

Der zweite Sender sendet zur Erfassung der Objektstrukturmerkmale Sendelichtstrahlen mit einem großen Strahlquerschnitt aus, wobei mit diesen ein großes Segment der Objektoberflächen erfasst wird und mit welchen der Empfänger möglichst vollständig ausgeleuchtet ist. Die Erfassung der Objektstrukturmerkmale sowie die Orientierung und Lage der Objektoberflächen sowie deren Oberflächenbeschaffenheit, wie zum Beispiel Kontraststrukturen, erfolgt durch Auswertung der unterschiedlichen Belichtungen der Empfangselemente des Empfängers.

In einer ersten vorteilhaften Ausfiihrungsform werden der erste und zweite Sender alternierend aktiviert, so dass die mit den einzelnen Sendern durchgeführten Messungen einzelnen nacheinander und unabhängig voneinander ausgewertet werden können.

In einer weiteren vorteilhaften Ausführungsform sind der erste und zweite Sender gleichzeitig aktiviert, so dass die mit diesen durchgeführten Messungen simultan erfolgen.

Hierzu ist die Sendeleistung des ersten Senders erheblich größer als jene des zweiten Senders. Damit ist gewährleistet, dass mit dem ersten Sender ein Lichtfleck auf der Objektoberfläche generiert wird, welcher sich deutlich von der Helligkeit der Beleuchtung des Objekts mittels der Sendelichtstrahlen des zweiten Senders abhebt. Damit kann die Lage des Lichtflecks, der durch die Sendelichtstrahlen des ersten Senders auf dem Empfänger erzeugt wird, trotz der gleichzeitigen Beleuchtung mit dem zweiten Sender sicher erfasst werden.

In einer vorteilhaften Ausführungsform werden nicht sämtliche Empfangselemente des Empfängers separat ausgewertet. Anstelle dessen werden für sämtliche Zeilen und Spalten des Empfängers die Summen der Empfangssignale der Empfangselemente gebildet, wobei sowohl zur Distanzmessung als auch zur Strukturanalyse der Objekte jeweils diese Summen ausgewertet werden. Dies führt zu einer erheblichen Vereinfachung der Auswertung der Empfangssignale und insbesondere zu einer beträchtlichen Reduzierung der für die Auswertung erforderlichen Rechenzeit mit.

In einer vorteilhaften Weiterbildung kann der optische Sensor zwei erste Sender aufweisen, welche jeweils zur Distanzmessung eingesetzt werden. Dann wird die Messgenauigkeit und Messsicherheit des optischen Sensors erheblich erhöht.

In einer weiteren vorteilhaften Weiterbildung kann der optische Sensor einen Reflektor mit einem vorgegebenen Identifikationsmuster aufweisen, welches den Überwachungsbereich begrenzt. Dabei wird von dem optischen Sensor nur dann ein Objektfeststellungssignal "freier Überwachungsbereich" ausgegeben, wenn mit dem zweiten Sender das Identifikationsmuster des Reflektors erfasst wird. Dies führt zu einer weiteren Erhöhung der Detektionssicherheit des optischen Sensors.

Schließlich kann die Detektionssicherheit des optischen Sensors durch Maßnahmen zur Stör- und Fremdlichtunterdrückung erhöht werden. Hierzu kann beispielsweise in der Auswerteeinheit die Differenz der Empfangssignale ausgewertet werden, die bei deaktiviertem und anschließend aktiviertem ersten und zweiten Sender erhalten wird.

Die Erfindung wird im Nachstehenden anhand der Zeichnungen erläutert. Es zeigen:
- Figur 1:: Schematische Darstellung eines ersten Ausführungsbeispiels eines optischen Sensors mit einem matrixförmigen Empfänger und einem ersten und zweiten Sender bei aktiviertem ersten Sender.
- Figur 2:: Optischer Sensor gemäß Figur 1 bei aktiviertem zweiten Sender.
- Figur 3:: Variante des optischen Sensors gemäß den Figuren 1 und 2 mit zwei ersten Sendern.
- Figur 4:: Zweites Ausführungsbeispiel eines optischen Sensors mit einem am Rand eines Überwachungsbereichs angeordneten Reflektor.
- Figur 5:: Draufsicht auf den Reflektor gemäß Figur 4 und Verlauf von Empfangssignalen am Empfänger bei der Detektion des Reflektors.

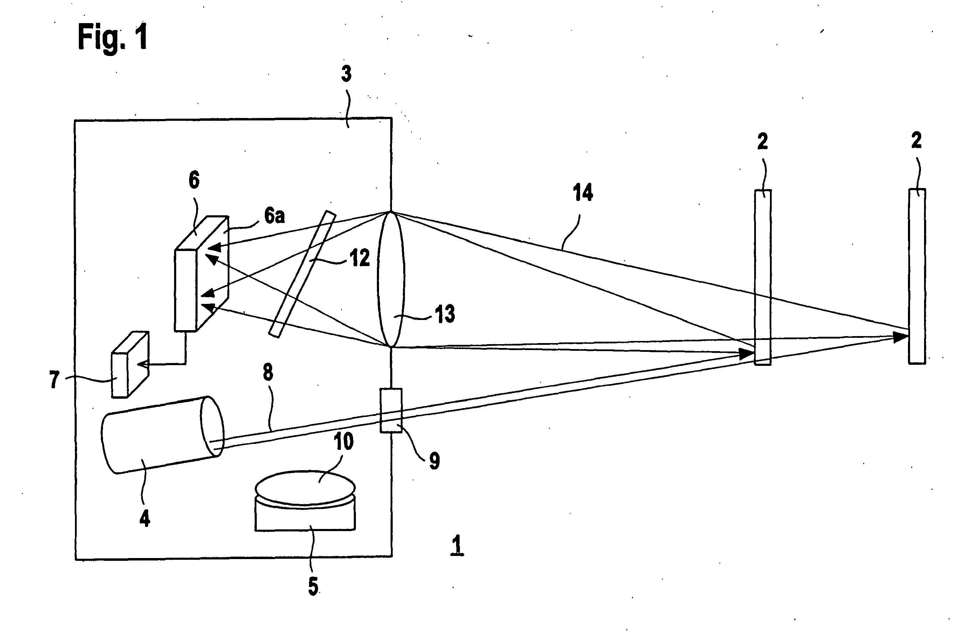

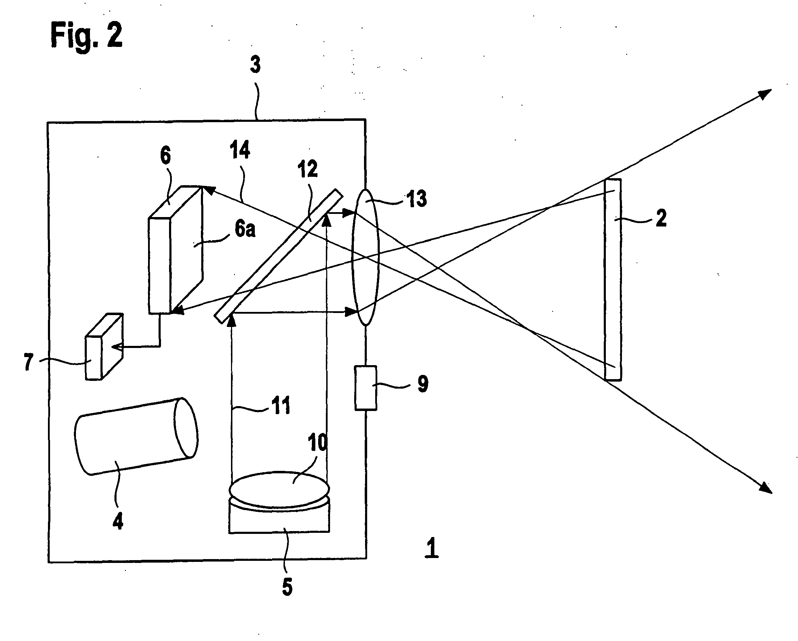

Die Figuren 1 und 2 zeigen ein erstes Ausführungsbeispiel eines optischen Sensors 1 zur Erfassung von Objekten 2 innerhalb eines Überwachungsbereichs. Der optische Sensor 1 ist in einem Gehäuse 3 integriert und weist einen ersten Sender 4 und einen zweiten Sender 5 sowie einen Empfänger 6 mit einer matrixförmigen Anordnung von Empfangselementen 6a auf. Die Sender 4, 5 sowie der Empfänger 6 sind an eine gemeinsame Auswerteeinheit 7 angeschlossen. Die Auswerteeinheit 7, die von einen Mikroprozessor oder dergleichen gebildet ist, dient zur Ansteuerung der Sender 4, 5 sowie zur Auswertung der an den Ausgängen des Empfängers 6 generierten Empfangssignale.

Der Empfänger 6 ist von einem rechteckigen, insbesondere quadratischen CMOS-Array gebildet. Im vorliegenden Fall weist das CMOS-Array eine identische Anzahl von Zeilen und Spalten von Empfangselementen 6a auf, wobei mittels einer im Empfänger 6 integrierten Schaltungslogik intern die Summen der Empfangssignale der einzelnen Zeilen und Spalten der Empfangselemente 6a gebildet werden und in die Auswerteeinheit 7 eingelesen werden. Alternativ oder zusätzlich können auch die Empfangssignale einzelner Empfangselemente 6a ausgelesen und ausgewertet werden.

Der erste Sender 4 bildet mit dem Empfänger 6 ein nach dem Triangulationsprinzip arbeitendes Distanzsensorelement. Der erste Sender 4 besteht im vorliegenden Fall aus einer Laserdiode. Prinzipiell kann der erste Sender 4 auch aus einer Leuchtdiode mit nachgeordneter Sendeoptik bestehen.

Die von dem ersten Sender emittierten Sendelichtstrahlen 8 weisen einen kleinen, punktförmigen Strahldurchmesser auf und werden durch ein Austrittsfenster 9 in der dem Überwachungsbereich zugewandten Frontwand des Gehäuses 3 aus dem optischen Sensor 1 heraus in den Überwachungsbereich geführt.

Der zweite Sender 5 bildet mit dem Empfänger 6 ein Sensorelement zur Erfassung von Objektstrukturmerkmalen wie der Orientierung des Objekts 2 relativ zum optischen Sensor 1 sowie der Konturen und Kontraststrukturen von Objektoberflächen.

Der zweite Sender 5 ist von einem Leuchtdiodenarray gebildet, welchem eine Streuscheibe 10 nachgeordnet ist. Mit dem zweiten Sender 5 werden Sendelichtstrahlen 11 in Form eines Flächenstrahls generiert, mit welchem große Segmente von Objektoberflächen beleuchtet werden.

Die Sendelichtstrahlen 11 des zweiten Senders 5 werden über einen Strahlteiler 12 und eine kombinierte Sende- und Empfangsoptik 13 in den Überwachungsbereich geführt. Die dort als Empfangslichtstrahlen 14 von einem Objekt 2 zurückreflektierten Sendelichtstrahlen 11 werden durch die Sende- und Empfangsoptik 13 und über den Strahlteiler 12 zum Empfänger geführt. Damit verlaufen die Sendelichtstrahlen 11 und Empfangslichtstrahlen 14 koaxial im Überwachungsbereich.

Die vom ersten Sender 4 emittierten Sendelichtstrahlen 11, die durch das Austrittsfenster 9 in dem Überwachungsbereich geführt werden, gelangen als Empfangslichtstrahlen 14 ebenfalls über die Sende- und Empfangsoptik 13 und den Strahlteiler 12 zum Empfänger 6.

Bei dem Ausführungsbeispiel gemäß den Figuren 1 und 2 werden der erste und zweite Sender 4, 5 über die Auswerteeinheit 7 alternierend aktiviert, so dass die in Figur 1 veranschaulichte Distanzmessung mit dem ersten Sender 4 und die Messungen zur Analyse von Objektstrukturen mit dem zweiten Sender 5 einzeln nacheinander und damit unabhängig voneinander durchgeführt werden.

Zur Durchführung der Distanzmessung wird die Lage des Lichtflecks, der durch die vom ersten Sender 4 emittierten und als Empfangslichtstrahlen 14 zum optischen Sensor 1 zurückreflektierten Sendelichtstrahlen 8 generiert wird, ausgewertet. Wie aus Figur 1 ersichtlich, verschiebt sich die Lage des Lichtflecks auf dem Empfänger 6 bei Variation der Distanz des Objektes 2 zum optischen Sensor 1.

Der erste Sender 4 liegt in Abstand zu einer Kante des Empfängers 6. Bei der Distanzmessung erfolgt dabei eine Summation der Zeilen der Empfangselemente 6a, die parallel zu dieser Kante des Empfängers 6 verlaufen. Aus diesen Summensignalen wird in der Auswerteeinheit 7 die Objektdistanz bestimmt.

Bei der Objektstrukturanalyse, die in Figur 2 veranschaulicht ist, ist allein der zweite Sender 5 aktiviert. Mit den Sendelichtstrahlen 11 des zweiten Senders 5 wird die zu vermessende Objektoberfläche flächig ausgeleuchtet. Die vom Objekt 2 zurückreflektierten Sendelichtstrahlen 11 leuchten den Empfänger 6 zumindest nahezu vollständig aus. Durch Auswertung der Belichtungsmuster des Empfängers 6, das heißt der an den einzelnen Empfangselementen 6a registrierten Lichtmengen, werden Informationen über die Lage eines Objektes 2 in der Ebene senkrecht zur Strahlachse der Sendelichtstrahlen 11 erhalten sowie Informationen über die Kontraststruktur der Objektoberfläche.

Auch bei den Messungen mit dem zweiten Sender 5 können die Summen von Zeilen und Spalten der Empfangselemente 6a des Empfängers 6 gebildet werden.

Durch eine kombinierte Auswertung der bei den Messungen mit dem ersten und zweiten Sender 4, 5 erhaltenen Empfangssignale kann eine dreidimensionale Objektvermessung durchgeführt werden.

Aus den Messwerten, die mit den beiden Sendern 4, 5 gewonnen werden, werden in der Auswerteeinheit 7 Objektfeststellungssignale generiert. Die Objektfeststellungssignale können insbesondere als analoge Messwerte wie zum Beispiel Distanzmesswerte, Objektkonturdaten, Objektstrukturdaten ausgebildet sein, die über eine nicht dargestellte analoge Schnittstelle ausgegeben werden. Zusätzlich oder alternativ kann in der Auswerteeinheit 7 ein binäres Schaltsignal als Objektfeststellungssignal generiert werden, dessen Schaltzustände angeben, ob sich ein Objekt 2 im Überwachungsbereich befindet oder nicht. Das Schaltsignal ist über einen ebenfalls nicht dargestellten Schaltausgang ausgebbar.

Alternativ zu der in den Figuren 1 und 2 dargestellten Ausführungsform können der erste und zweite Sender 4, 5 auch gleichzeitig aktiviert werden. In diesem Fall ist die Sendeleistung des ersten Senders 4 erheblich größer als jene des zweiten Senders 5. Auf diese Weise ist gewährleistet, dass mit den Sendelichtstrahlen 8 des ersten Senders 4 ein erheblich hellerer Lichtfleck als mit den Sendelichtstrahlen 11 des zweiten Senders 5 auf der Oberfläche generiert werden. Damit ist gewährleistet, dass trotz gleichzeitiger Beleuchtung mit den Sendelichtstrahlen 11 des zweiten Senders 5 bei der Distanzmessung mit dem ersten Sender 4 ein am Empfänger 6 deutlich erkennbarer Lichtfleck generiert wird, der als Maß für die Objektdistanz auswertbar ist.

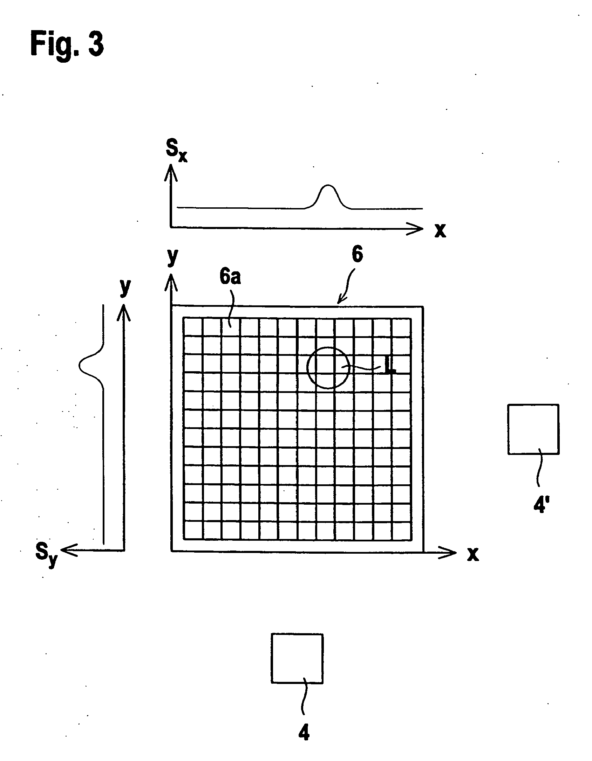

Figur 3 zeigt eine Erweiterung des optischen Sensors 1 gemäß den Figuren 1 und 2 dahingehend, dass anstelle eines ersten Senders 4 nun zwei erste Sender 4, 4' zur Durchführung von Distanzmessungen vorgesehen sind, wobei diese alternierend aktiviert werden. Die Sender 4, 4' können Sendelicht gleicher oder verschiedener Wellenlänge emittieren.

Wie aus Figur 3 ersichtlich, ist ein erster Sender 4 in Abstand zu einer in x-Richtung verlaufenden Kante des Empfängers 6 angeordnet und ein weiterer erster Sender 4' in Abstand zu einer in y-Richtung verlaufenden Kante des Empfängers 6 angeordnet.

Weiterhin ist in Figur 3 der bei der Messung mit dem Sender 4 oder 4' auf dem Empfänger 6 generierte Lichtfleck der Empfangslichtstrahlen 14 mit L bezeichnet.

Bei der Distanzmessung mit dem ersten Sender 4 werden die Summen der Empfangssignale der in x-Richtung verlaufenden Zeilen von Empfangselementen 6a gebildet, wodurch die in Figur 3 dargestellten Summenwerte S_{y} in Abhängigkeit der y-Koordinate des Empfängers 6 erhalten werden. Das Maximum des Verlaufs der Summenwerte S_{y} liefert die Lage des Lichtflecks in y-Richtung des Empfängers 6, welche zur Distanzmessung mit dem ersten Sender 4 herangezogen wird.

Entsprechend werden bei der Distanzmessung mit dem Sender 4' die Summen der Empfangssignale der in y-Richtung verlaufenden Spalten von Empfangselementen 6a gebildet, wodurch die in Figur 3 dargestellten Summenwerte Sₓ in Abhängigkeit der x-Koordinate des Empfängers 6 erhalten werden. Das Maximum des Verlaufs der Summenwerte Sₓ liefert die Lage des Lichtflecks in x-Richtung des Empfängers 6, welche zur Distanzmessung mit dem ersten Sender 4' herangezogen werden.

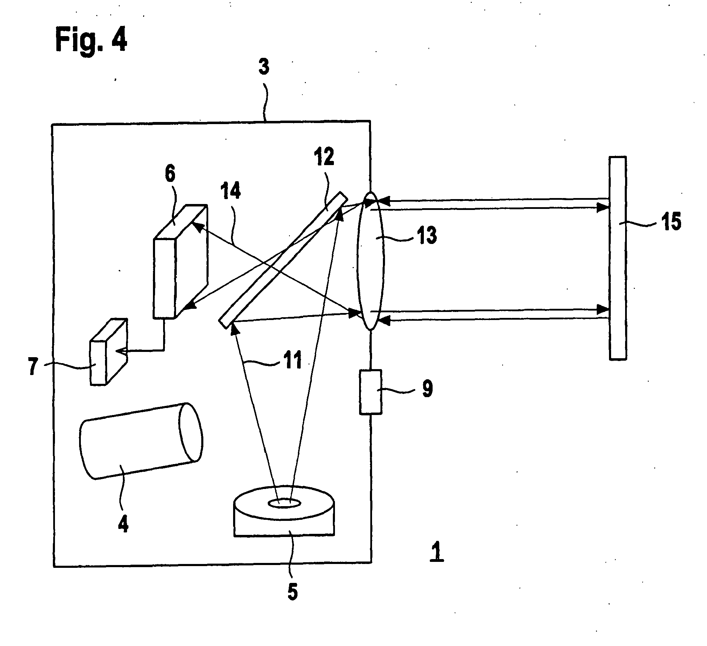

Figur 4 zeigt ein weiteres Ausführungsbeispiel des optischen Sensors 1. In diesem Fall ist der zweite Sender 5 von einer Punktlichtquelle wie zum Beispiel eine Leuchtdiode gebildet, die Sendelichtstrahlen 11 in Form eines stark divergenten Strahlenbündels emittiert. Durch die Sende- und Empfangsoptik 13 erfolgt eine Strahlformung der Sendelichtstrahlen 11 derart, dass diese ein kollimiertes Strahlenbündel bilden, mittels dessen eine flächige Beleuchtung der Objekte 2 erfolgt.

Ansonsten entspricht der optische Sensor 1 gemäß Figur 4 hinsichtlich Aufbau und Funktionsweise der Ausführungsform gemäß den Figuren 1 und 2. Insbesondere werden analog zur Ausführungsform gemäß den Figuren 1 und 2 die Sender 4, 5 alternierend aktiviert. Figur 4 zeigt eine Messung, bei welcher der zweite Sender 5 aktiviert und der erste Sender 4 deaktiviert ist.

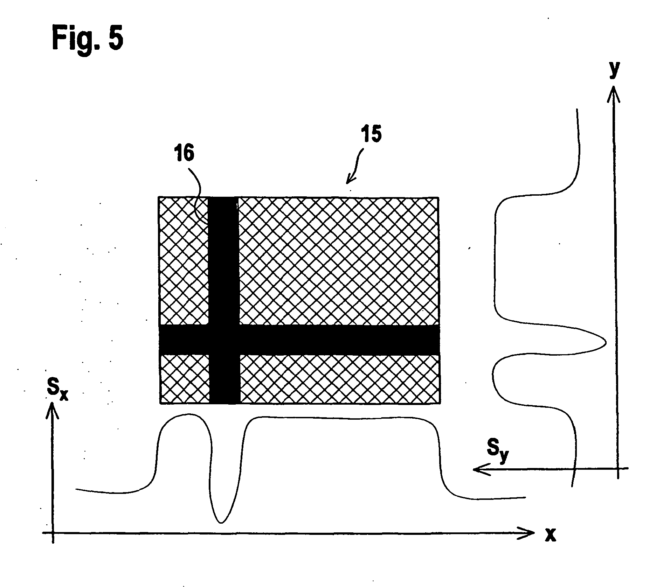

Ein weiterer Unterschied zur Ausführungsform gemäß den Figuren 1 und 2 besteht darin, dass dem optischen Sensor 1 gemäß Figur 4 ein Reflektor 15 zugeordnet ist, welcher den Überwachungsbereich begrenzt. Wie aus der Einzel-Darstellung des Reflektors 15 in Figur 5 ersichtlich, ist auf die Frontseite des Reflektors 15 ein Kreuz als Identifikations-Muster 16 aufgebracht.

Bei freiem Überwachungsbereich treffen die von dem ersten Sender 4 oder dem zweiten Sender 5 emittierten Sendelichtstrahlen 8, 11 auf den Reflektor 15 und werden von diesen zum Empfänger 6 zurückreflektiert.

Um eine sichere Erkennung eines freien Überwachungsbereichs zu gewährleisten, wird bei der Messung mit dem zweiten Sender 5 kontrolliert, ob das Identifikationsmuster des Reflektors 15 erkannt wird. Auch können bei dieser Messung auch Verkippungen oder sonstige Dejustagen des Reflektors 15 erfasst werden.

Weiterhin kann zur Kontrolle der Reflektorposition mit dem ersten Sender 4 dessen Distanz bestimmt und kontrolliert werden.

Figur 5 zeigt schematisch die Messwerte, die bei der Reflektordetektion erhalten werden. Bei freiem Überwachungsbereich und ideal ausgerichtetem Reflektor 15 wird dessen Identifikationsmuster auf den Empfänger 6 so abgebildet, dass der horizontale Balken des Kreuzes des Identifikationsmusters in x-Richtung des Empfängers 6 (siehe Figur 3) und der vertikale Balken des Kreuzes in y-Richtung des Empfängers 6 (siehe Figur 3) verläuft. Da das Kreuz eine dunkle Markierung auf dem stark reflektierenden Hintergrund des Reflektors 15 bildet, werden die Empfangselemente 6a des Empfängers 6, auf welche von dem Kreuz zurückreflektierte Empfangslichtstrahlen 14 auftreffen, weniger stark belichtet als Empfangselemente 6a, auf welche Empfangslichtstrahlen 14 auftreffen, die von der Reflektorfläche zurück reflektiert werden.

Die Auswertung der Empfangssignale des Empfängers 6 erfolgt analog zum Ausführungsbeispiel gemäß Figur 3 derart, dass einerseits die Empfangssignale der Empfangselemente 6a jeweils einer Spalte des Empfängers 6 und andererseits die Empfangssignale der Empfangselemente 6a jeweils einer Zeile des Empfängers 6 summiert werden.

In Figur 5 ist mit Sₓ der Verlauf der Spaltensummenwerte in Abhängigkeit der Empfangselemente 6a in x-Richtung des Empfängers 6 dargestellt. Weiterhin ist in Figur 5 mit S_{y} der Verlauf der Zeilennummernwerte in Abhängigkeit der Empfangselemente 6a in y-Richtung des Empfängers 6 dargestellt.

Das Minimum im Signalverlauf von Sₓ ist durch den vertikalen dunklen Balken des Kreuzes auf dem Reflektor 15 verursacht. Das Minimum im Signalverlauf von S_{y} ist durch den horizontalen dunklen Balken des Kreuzes auf dem Reflektor 15 verursacht.

Die Signalverläufe Sₓ und S_{y} werden vorzugsweise als Referenzwerte zur Kennzeichnung des Empfangssignalverlaufes bei freiem Überwachungsbereich in der Auswerteeinheit 7 abgespeichert. Dringt ein Objekt 2 in den Überwachungsbereich ein, so wird dieses dadurch erkannt, dass die registrierten Empfangssignalverläufe von den abgespeicherten Referenzsignalverläufen abweichen.

Weiterhin können auch Dejustagen des Reflektors 15 in Form von Verschiebungen, Verkippungen und dergleichen erfasst werden. Derartige Dejustagen führen zu Veränderungen der Formen und Lagen der Minima der in Figur 5 dargestellten Signalverläufe Sₓ und S_{y}.

### Bezugszeichenliste

- (1): Optischer Sensor
- (2): Objekt
- (3): Gehäuse
- (4): Sender
- (5): Sender
- (6): Empfänger
- (6a): Empfangselement
- (7): Auswerteeinheit
- (8): Sendelichtstrahlen
- (9): Austrittsfenster
- (10): Streuscheibe
- (11): Sendelichtstrahlen
- (12): Strahlteiler
- (13): Sende- und Empfangsoptik
- (14): Empfangslichtstrahlen
- (15): Reflektor

## Patentansprüche

1. Optischer Sensor zur Erfassung von Objekten (2) in einem Überwachungsbereich mit einem Empfänger (6) bestehend aus einer matrixförmigen Anordnung von Empfangselementen (6a), mit wenigstens einem ersten Sender (4), welcher in Abstand zu einer Kante des Empfängers (6) angeordnet ist, wobei zur Bestimmung der Distanzen von Objekten nach dem Triangulationsprinzip die Lage des durch die vom ersten Sender (4) emittierten Sendelichtstrahlen (8) generierten Lichtflecks auf dem Empfänger (6) ausgewertet wird, und mit einem zweiten Sender (5), wobei mit den vom zweiten Sender (5) emittierten Sendelichtstrahlen (11) eine flächige Ausleuchtung von Oberflächen von Objekten (2) zur Ermittlung von Objektstrukturmerkmalen durchgeführt wird, und mit einer Auswerteeinheit (7), in welcher durch eine kombinierte Auswertung der bei den Messungen mit dem ersten Sender (4) und dem zweiten Sender (5) erhaltenen Empfangssignale des Empfängers (6) ein Objektfeststellungssignal generierbar ist.

2. Optischer Sensor nach Anspruch 1, **dadurch gekennzeichnet, dass** der Empfänger (6) von einem CMOS-Array gebildet ist.

3. Optischer Sensor nach Anspruch 1, **dadurch gekennzeichnet, dass** der erste Sender (4) von einer Laserdiode gebildet ist.

4. Optischer Sensor nach Anspruch 3, **dadurch gekennzeichnet, dass** der erste Sender (4) von einer Leuchtdiode gebildet ist, welcher eine Sendeoptik nachgeordnet ist.

5. Optischer Sensor nach einem der Ansprüche 1 bis 4, **dadurch gekennzeichnet, dass** dieser zwei erste Sender (4, 4') aufweist, wobei die Sender (4, 4') in Abstand zu senkrecht zueinander angeordneten Kanten des Empfängers (6) liegen.

6. Optischer Sensor nach einem der Ansprüche 1 bis 5, **dadurch gekennzeichnet, dass** zur Durchführung von Distanzmessungen mit dem oder jedem ersten Sender (4, 4') die Empfangssignale der Empfangselemente (6a) von Zeilen des Empfängers (6) summiert werden, welche parallel zur Kante verlaufen, welcher dieser Sender (4) gegenüberliegt.

7. Optischer Sensor nach einem der Ansprüche 1 bis 6, **dadurch gekennzeichnet, dass** dieser einen Strahlteiler (12) zur koaxialen Strahlführung der vom zweiten Sender (5) emittierten Sendelichtstrahlen (11) und der auf den Empfänger (6) geführten Empfangslichtstrahlen (14) aufweist.

8. Optischer Sensor nach einem der Ansprüche 1 bis 7, **dadurch gekennzeichnet, dass** der zweite Sender (5) von einem Leuchtdiodenarray gebildet ist.

9. Optischer Sensor nach Anspruch 8, **dadurch gekennzeichnet, dass** dem Leuchtdiodenarray eine Streuscheibe nachgeordnet ist.

10. Optischer Sensor nach einem der Ansprüche 1 bis 7, **dadurch gekennzeichnet, dass** der zweite Sender (5) von einer Punktlichtquelle gebildet ist, welche Sendelichtstrahlen (11) in Form eines divergenten Strahlenbündels emittiert.

11. Optischer Sensor nach Anspruch 10, **dadurch gekennzeichnet, dass** der Überwachungsbereich von einem Reflektor (15) mit einem Identifikationsmuster begrenzt ist.

12. Optischer Sensor nach Anspruch 11, **dadurch gekennzeichnet, dass** in der Auswerteeinheit als Objektfeststellungssignal die Meldung "freier Überwachungsbereich" angegeben wird, falls mit den vom zweiten Sender (5) emittierten Sendelichtstrahlen (8) das Identifikationsmuster des Reflektors (15) erkannt wird.

13. Optischer Sensor nach einem der Ansprüche 1 bis 12, **dadurch gekennzeichnet, dass** der erste und der zweite Sender (4, 5) alternierend aktiviert sind.

14. Optischer Sensor nach einem der Ansprüche 1 bis 12, **dadurch gekennzeichnet, dass** der erste und der zweite Sender (4, 5) gleichzeitig aktiviert sind, wobei die Sendeleistung des ersten Senders (4) signifikant höher ist als die Sendeleistung des zweiten Senders (5).

15. Optischer Sensor nach einem der Ansprüche 1 bis 14, **dadurch gekennzeichnet, dass** in der Auswerteeinheit (7) als Objektfeststellungssignal ein binäres Schaltsignal generiert wird, welches über einen Schaltausgang ausgebbar ist und dessen Schaltzustände angeben, ob sich ein Objekt (2) im Überwachungsbereich befindet oder nicht.

16. Optischer Sensor nach einem der Ansprüche 1 bis 15, **dadurch gekennzeichnet, dass** in der Auswerteeinheit (7) ein analoges Objektfeststellungssignal generiert wird, welches über eine Schnittstelle ausgebbar ist.

17. Optischer Sensor nach einem der Ansprüche 1 bis 16, **dadurch gekennzeichnet, dass** zur Unterdrückung von Fremdlichteinflüssen die Differenzen der Empfangssignale gebildet werden, die bei deaktivierten und aktivierten Sendern (4, 5) erhalten werden.

## Claims

1. Optical sensor for detection of objects (2) in a monitoring region, with a receiver (6) consisting of a matrix-shaped arrangement of receiving elements (6a), with at least one first transmitter (4) arranged at a spacing from an edge of the receiver (6), wherein for determination of the distances of objects according to the principle of triangulation the position of the light spot, which is generated by the transmitted light beams (8) emitted by the first transmitter (4), on the receiver (6) is evaluated, and with a second transmitter (5), wherein an areal illumination of surfaces of objects (2) for ascertaining object structural features is carried out with the transmitted light beams (11) emitted by the second sensor (5), and with an evaluating unit (7) in which an object detection signal can be generated by a combined evaluation of the received signals, which are obtained in the measurements by the first transmitter (4) and the second transmitter (5), of the receiver (6).

2. Optical sensor according to claim 1, **characterised in that** the receiver (6) is formed by a CMOS array.

3. Optical sensor according to claim 1, **characterised in that** the first transmitter (4) is formed by a laser diode.

4. Optical sensor according to claim 3, **characterised in that** the first transmitter (4) is formed by a light-emitting diode, downstream of which a transmitting optical system is arranged.

5. Optical sensor according to one of claims 1 to 4, **characterised in that** this comprises two first transmitters (4, 4'), wherein the transmitters (4, 4') lie at a spacing from edges, which are arranged perpendicularly relative to one another, of the receiver (6).

6. Optical sensor according to one of claims 1 to 5, **characterised in that** for carrying out distance measurements with the or each first transmitter (4, 4') the received signals of the receiving elements (6a) of those lines of the receiver (6) which extend parallel to the edge opposite to this transmitter (4) are summated.

7. Optical sensor according to one of claims 1 to 6, **characterised in that** this comprises a beam divider (12) for coaxial beam guidance of the transmitted light beams (11) emitted by the second sensor (5) and the received light beams (14) led to the receiver (6).

8. Optical sensor according to one of claims 1 to 7, **characterised in that** the second transmitter (5) is formed by a light-emitting diode array.

9. Optical sensor according to claim 8, **characterised in that** a diffusing screen is arranged downstream of the light-emitting diode array.

10. Optical sensor according to one of claims 1 to 7, **characterised in that** the second transmitter (5) is formed by a point light source which emits transmitted light beams (11) in the form of a divergent beam bundle.

11. Optical sensor according to claim 10, **characterised in that** the monitoring region is bounded by a reflector (15) with an identification pattern.

12. Optical sensor according to claim 11, **characterised in that** the report 'free monitoring region' is indicated in the evaluating unit as object detection signal if the identification pattern of the reflector (15) is recognised by the transmitted light beams (8) emitted by the second transmitter (5).

13. Optical sensor according to one of claims 1 to 12, **characterised in that** the first and second transmitters (4, 5) are activated in alternation.

14. Optical sensor according to one of claims 1 to 12, **characterised in that** the first and second transmitters (4, 5) are activated simultaneously, wherein the transmitting power of the first transmitter (4) is significantly higher than the transmitting power of the second transmitter (5).

15. Optical sensor according to one of claims 1 to 14, **characterised in that** a binary switching signal, which can be issued by way of a switching output and the switching states of which indicate whether or not an object (2) is located in the monitoring region, is generated in the evaluating unit (7) as object detection signal.

16. Optical sensor according to one of claims 1 to 15, **characterised in that** an analog object detection signal, which can be issued by way of an interface, is generated in the evaluating unit (7).

17. Optical sensor according to one of claims 1 to 16, **characterised in that** for suppression of extraneous light influences the differences of the received signals obtained with deactivated and activated transmitters (4, 5) are formed.

## Revendications

1. Capteur optique pour la saisie d'objets (2) dans une zone de surveillance, comprenant un récepteur (6) composé d'un agencement matriciel d'éléments de réception (6a), comprenant au moins un premier émetteur (4) qui est disposé à distance d'un bord du récepteur (6), sachant que pour déterminer les distances d'objets selon le principe de la triangulation on évalue la position du spot lumineux généré par les rayons lumineux d'émission (8) émis par le premier émetteur (4) sur le récepteur (6), et comprenant un deuxième émetteur (5), sachant que pour déterminer des caractéristiques structurelles des objets on réalise un éclairage en nappe de surfaces des objets (2) avec les rayons lumineux d'émission (11) émis par le deuxième émetteur (5), et comprenant une unité d'évaluation (7) dans laquelle un signal de détection d'objet peut être généré par une évaluation combinée des signaux de réception du récepteur (6) reçus lors des mesures avec le premier émetteur (4) et le deuxième émetteur (5).

2. Capteur optique selon la revendication 1, **caractérisé en ce que** le récepteur (6) est formé par un réseau CMOS.

3. Capteur optique selon la revendication 1, **caractérisé en ce que** le premier émetteur (4) est formé par une diode laser.

4. Capteur optique selon la revendication 3, **caractérisé en ce que** le premier émetteur (4) est formé par une diode laser à la suite de laquelle est disposée une optique d'émission.

5. Capteur optique selon l'une des revendications 1 à 4, **caractérisé en ce que** celui-ci présente deux premiers émetteurs (4, 4'), sachant que les émetteurs (4, 4') sont situés à distance de bords perpendiculaires l'un à l'autre du récepteur (6).

6. Capteur optique selon l'une des revendications 1 à 5, **caractérisé en ce que**, pour réaliser des mesures de distance avec le ou chaque premier émetteur (4, 4'), on somme les signaux de réception des éléments de réception (6a) de lignes du récepteur (6) qui sont parallèles au bord en face duquel cet émetteur (4) est situé.

7. Capteur optique selon l'une des revendications 1 à 6, **caractérisé en ce que** celui-ci présente un diviseur de faisceau (12) pour le guidage de faisceau coaxial des rayons lumineux d'émission (11) émis par le deuxième émetteur (5) et des rayons lumineux de réception (14) guidés sur le récepteur (6).

8. Capteur optique selon l'une des revendications 1 à 7, **caractérisé en ce que** le deuxième émetteur (5) est formé par un réseau de diodes électroluminescentes.

9. Capteur optique selon la revendication 8, **caractérisé en ce qu'**un verre diffuseur est disposé à la suite du réseau de diodes électroluminescentes.

10. Capteur optique selon l'une des revendications 1 à 7, **caractérisé en ce que** le deuxième émetteur (5) est formé par une source de lumière ponctuelle qui émet des rayons lumineux d'émission (11) sous la forme d'un faisceau lumineux divergent.

11. Capteur optique selon la revendication 10, **caractérisé en ce que** la zone de surveillance est limitée par un réflecteur (15) muni d'un motif d'identification.

12. Capteur optique selon la revendication 11, **caractérisé en ce que** le message « zone de surveillance libre » est indiqué dans l'unité d'évaluation en tant que signal de détection d'objet si le motif d'identification du réflecteur (15) est reconnu avec les rayons lumineux d'émission (11) émis par le deuxième émetteur (5).

13. Capteur optique selon l'une des revendications 1 à 12, **caractérisé en ce que** le premier et le deuxième émetteurs (4, 5) sont activés alternativement.

14. Capteur optique selon l'une des revendications 1 à 12, **caractérisé en ce que** le premier et le deuxième émetteurs (4, 5) sont activés en même temps, sachant que la puissance d'émission du premier émetteur (4) est significativement plus élevée que la puissance d'émission du deuxième émetteur (5).

15. Capteur optique selon l'une des revendications 1 à 14, **caractérisé en ce que** l'on génère dans l'unité d'évaluation (7), en tant que signal de détection d'objet, un signal de commutation binaire qui peut être délivré via une sortie de commutation et dont les états de commutation indiquent si un objet (2) se trouve ou non dans la zone de surveillance.

16. Capteur optique selon l'une des revendications 1 à 15, **caractérisé en ce que** l'on génère dans l'unité d'évaluation (7) un signal de détection d'objet analogique qui peut être délivré via une interface.

17. Capteur optique selon l'une des revendications 1 à 16, **caractérisé en ce que**, pour supprimer les influences lumineuses parasites, on forme les différences des signaux de réception qui sont reçus avec les émetteurs (4, 5) désactivés et activés.
